# EUROPÄISCHE PATENTSCHRIFT

(11) **EP 0 457 172 B1**
(45) Veröffentlichungstag und Bekanntmachung des Hinweises auf die Patenterteilung: **11.09.1996**
(21) Anmeldenummer: 91107454.0
(22) Anmeldetag: 08.05.1991
(51) Int. Cl.: A01K 1/00, A01K 1/02

(54) **Trenngitter für die Viehhaltung**
Separation grid for animal husbandry
Grille de séparation pour l'exploitation du bétail

(30) Priorität: 15.05.1990 DE 4015516
(43) Veröffentlichungstag der Anmeldung: 21.11.1991
(73) Patentinhaber: Suding, Alfons, D-49456 Bakum (DE)
(72) Erfinder: Suding, Alfons, D-49456 Bakum (DE)
(74) Vertreter: Eisenführ, Speiser & Partner

(56) Entgegenhaltungen:
- DE-U- 8 808 656

## Beschreibung

Die Erfindung betrifft ein Trenngitter für die Viehhaltung, mit einem unteren und einem oberen Träger, die im Abstand voneinander gehalten sind und einander gegenüberliegende Flächen aufweisen, mit einer Vielzahl von dazwischen angeordneten Latten, deren Enden in Vertiefungen dieser Flächen der Träger formschlüssig gehalten sind und die aus Hart-PVC bestehen.

Es sind Trenngitter dieser Art bekannt, bei denen der untere und der obere Träger aus Stahlbeton bestehen, während die dazwischen angeordneten Latten als Kunststofflatten formschlüssig in entsprechenden Vertiefungen der Träger eingesetzt und formschlüssig gehalten sind (Prospekt "SU-box, Schweinemast-Stallsystem" der Firma Suding Beton- und Kunststoffwerk GmbH.

Bei der Viehhaltung, insbesondere Massentierhaltung sind solche Trenngitter aufgrund des verwendeten Futters und der Fäkalien einer starken Korrosion ausgesetzt, so daß mit der Zeit die Stahlarmierung geschwächt und damit das ganze Gitter bruchgefährdet wird. Dies ist insbesondere dadurch bedingt, daß der Beton der Träger diese aggressiven Materialien bis zur Stahlarmierung passieren läßt. Die zwischen den Trägern angeordneten Latten bestanden bisher schon aus Kunststoff, da an diese Teile geringere Festigkeitsanforderungen gestellt wurden, so daß hier keine Korrosion erfolgen konnte.

Der vorliegenden Erfindung liegt die Aufgabe zugrunde, ein Trenngitter für die Viehhaltung, insbesondere Massentierhaltung, vorzuschlagen, das auch bei aggressiven Materialien keiner Korrosionsgefahr unterworfen ist und trotzdem die erforderliche Festigkeit wie bisher bekannte Trenngitter aufweist. Die Herstellung soll selbstverständlich ebenfalls einfach und ohne großen Aufwand möglich sein.

Diese Aufgabe wird gemäß der vorliegenden Erfindung dadurch gelöst, daß die Träger je aus einem Hohlkastenprofil aus Kunststoff bestehen und daß innerhalb des Hohlkastenprofils eine Versteifung angeordnet ist. Bei einer solchen Lösung ist nur die Außenseite des Hohlkastenprofils den aggressiven Materialien ausgesetzt, ohne daß diese nach innen an die Versteifung bzw. Armierung herangelangen kann. Die Herstellung mittels eines solchen Hohlkastenprofils ist einfach, denn dieses bildet gleichzeitig die äußere Form. Durch die glatte Oberflächenstruktur des Kunststoffes wird die Stallhygiene verbessert, so daß Krankheitskeimen und Bakterien kein Lebensraum zur Verfügung gestellt wird und eine Reinigung der Trenngitter wesentlich einfacher vorgenommen werden kann.

Eine besonders vorteilhafte Ausführungsform des erfindungsgemäßen Trenngitters ist dadurch gekennzeichnet, daß das Hohlkastenprofil aus einem etwa U- oder V-förmigen, offenen Kuststoffprofil und einem dieses verschließenden Deckelprofil besteht. Dieser Aufbau läßt es zu, daß das offene Kunststoffprofil in beliebiger Länge aus Kunststoff gespritzt werden kann, während lediglich das Deckelprofil mit den entsprechenden Vertiefungen zur Aufnahme der Lattenenden versehen werden muß. Beide Profile sind vorzugsweise miteinander verklebt. Eine besonders stabile Halterung und auch Verklebung läßt sich dadurch erreichen, daß am Rand des offenen Kunststoffprofils und am Rand des Deckelprofils eine Rinne bzw. eine Vorsprungsrippe vorgesehen sind, die zur Verbindung beider Profile ineinandergreifen. Die Verklebung erfolgt zweckmäßigerweise im Bereich der Rinne und der Vorsprungsrippe.

Die Versteifung erfolgt zweckmäßigerweise mittels einer Betonfüllung der Träger, insbesondere mit einer Stahlarmierung in Korbform. Es ist jedoch auch möglich, die Versteifung in Form eines etwa U- oder V-förmigen Metallträgers, insbesondere aus Stahl, auszubilden. Im Falle eines von vornherein geschlossenen Hohlkastenprofils muß die Stahlarmierung bzw. die Metallträger-Versteifung vom Ende her in die Träger eingeschoben werden. Wird das Hohlkastenprofil jedoch aus einem offenen Kunststoffprofil und einem zu verschließenden Deckelprofil zusammengesetzt, so kann zweckmäßigerweise die Stahlarmierung bzw. der Metallträger vor dem Verschließen mit dem Deckelprofil von der offenen Seite her in das noch offene Kunststoffprofil eingesetzt werden.

Weitere vorteilhafte Ausgestaltungen der Erfindung gehen aus den Unteransprüchen sowie der nachfolgenden Beschreibung von Ausführungsbeispielen hervor. Die Erfindung wird nachfolgend anhand zweier Ausführungsbeispiele unter Bezug auf die beigefügten Zeichnungen näher erläutert.

Es zeigen:
- Fig. 1: eine perspektivische Ansicht einer ersten Ausführungsform des Trenngitters, teilweise geschnitten;
- Fig. 2: eine vergrößerte Darstellung des unteren Trägers der Ausführungsform nach Fig. 1 mit einer Betonfüllung und Stahlarmierung, im Schnitt; und
- Fig. 3: eine ähnliche Ansicht wie Fig. 2, jedoch mit einem eingelegten Metallträger zur Versteifung.

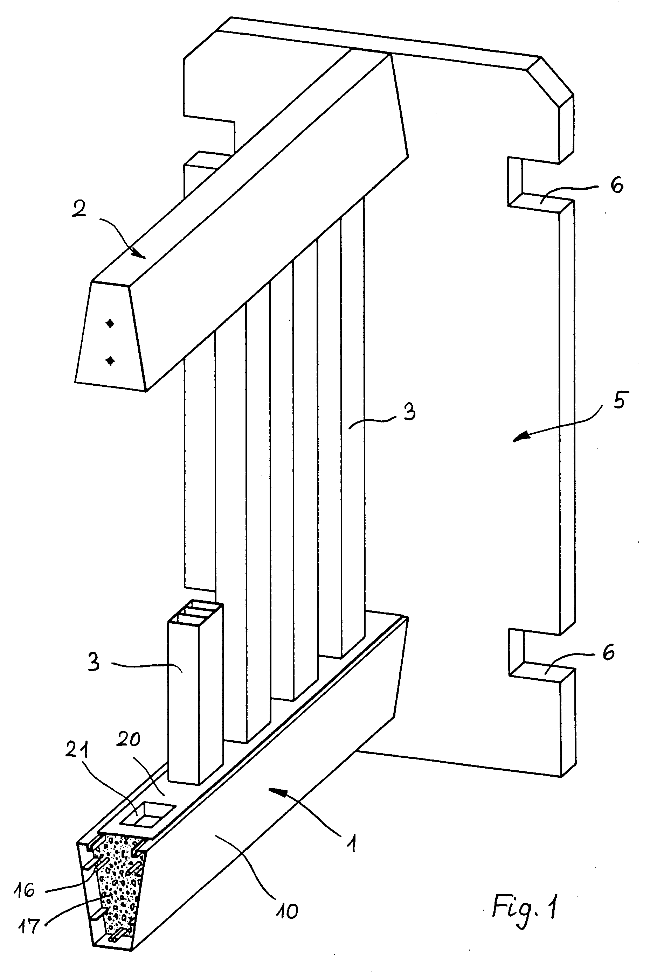

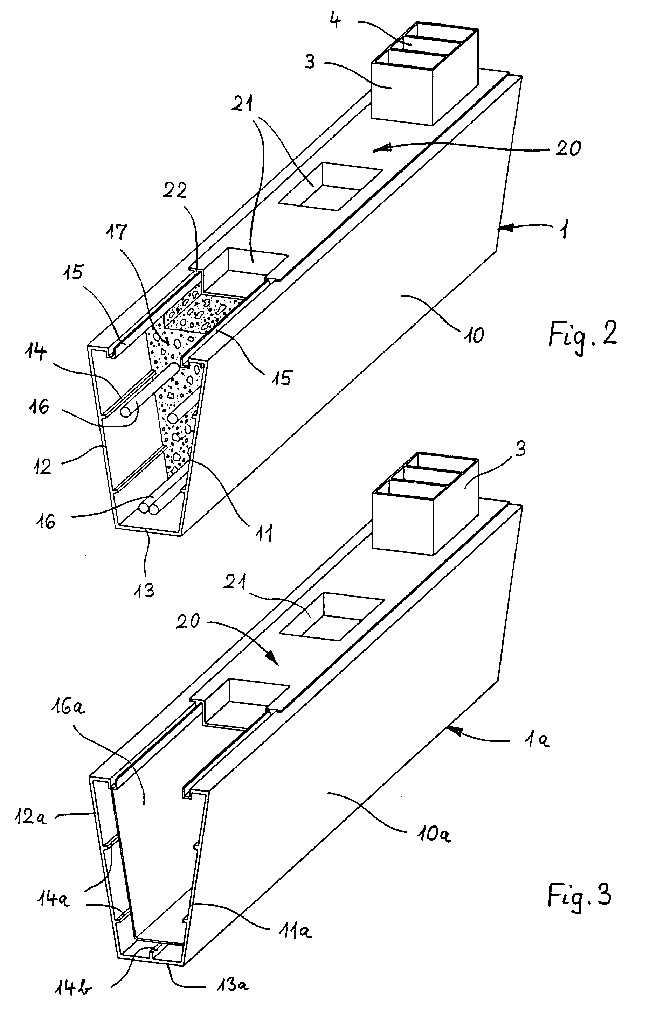

Nachfolgend soll zunächst eine erste Ausführungsform anhand der Fig. 1 und 2 beschrieben werden. Das Trenngitter besteht aus einem unteren Träger 1 und einem oberen Träger 2, die durch ein Kopfstück 5 parallel im Abstand voneinander gehalten werden. Die beiden Träger 1 und 2 sind etwa gleich ausgebildet und weisen an einer Fläche Vertiefungen 21 auf, in denen die Enden einer Vielzahl von Latten 3 formschlüssig gehaltert sind. Diese Latten 3 bestehen aus einem kastenförmigen Profil und weisen im Inneren Verstärkungsstege 4 auf. Das Kopfstück 5 ist an seinen Rändern mit schlitzartigen Aussparungen 6 versehen, in die Stalltore eingehängt werden können.

Der untere Träger 1 und der obere Träger 2, die etwa gleich ausgebildet sind, bestehen aus einem U- bzw. V-förmigen Kunststoffprofil 10, dessen Öffnung durch ein Deckelprofil 20 verschlossen ist. Beide Teile bilden so zusammen ein Hohlkastenprofil. Es ist auch möglich, dieses Hohlkastenprofil einstückig auszubilden; dies führt jedoch zu gewissen Schwierigkeiten bei der Herstellung.

Der Innenraum des aus dem Kunststoffprofil 10 und dem Deckelprofil 20 bestehenden Hohlkastenprofils ist mit einer Betonfüllung 17 versehen, die durch eine Stahlarmierung zusätzlich verstärkt ist. Das aus den Teilen 10 und 20 bestehende Hohlkastenprofil besteht aus Hart-PVC und schließt die Betonfüllung 17 und insbesondere die Stahlarmierung 16 gegen äußere Einflüsse, also gegen Korrosion ab.

Damit das Kunststoffprofil 10 und das Deckelprofil 20 gut miteinander verbunden werden können, sind am offenen Rand des Kunststoffprofils 10 zu beiden Seiten Rinnen 15 vorgesehen, während die Ränder des Deckelprofils 20 entsprechend angepaßte Vorsprungsrippen aufweisen. Beide Teile greifen beim Verbinden ineinander und werden zweckmäßigerweise durch Verklebung miteinander verbunden. Bei der Verfüllung des Hohlkastenprofils mit Beton kann die Verbindung der beiden Profile durch Angüsse (nicht gezeigt) auf der Unterseite des Deckelprofils 20 gewährleistet werden, so daß hierbei ein Verkleben nicht notwendig ist.

Insbesondere aus der Fig. 2 ist zu sehen, daß die beiden Schenkel 11, 12 des Kunststoffprofils 10 mit Verstärkungsrippen 14 versehen sind, die für eine zusätzliche Formstabilität des Hohlkastenprofils vor dem Einfüllen bzw. Einsetzen der Versteifung dienen. Der Verbindungsabschnitt 13 zwischen den beiden Schenkeln 11 und 12 kann ebenfalls mit einer entsprechenden Verstärkungsrippe versehen sein, wie es in Fig. 3 zu sehen ist. Diese Rippen 14, und auch 14b, sorgen auch für eine bessere Haftung der Seitenwände des Hohlkastenprofils an der Betonfüllung, insbesondere wenn die Rippen schwalbenschwanzartig (nicht gezeigt) ausgebildet sind.

Fig. 3 zeigt nun eine zweite Ausführungsform der vorliegenden Erfindung, bei der im Unterschied zu der ersten Ausführungsform keine Betonfüllung und auch keine Stahlarmierung vorgesehen ist. Die Versteifung des in Fig. 3 gezeigten Trägers 1a besteht vielmehr aus einem eingelegten Stahlträger 16a, der ebenfalls wie das Kunststoffprofil 10a U-förmig bzw. V-förmig ausgebildet ist. Die Innenwände des Kunststoffprofils 10a sind ebenfalls im Bereich der Schenkel 11a und 12a mit Rippen 14a versehen, und der Verbindungsabschnitt 13a weist ebenfalls eine Rippe 14b auf. Diese Rippen 14a und 14b dienen in erster Linie zur sicheren Positionierung des eingelegten Stahlträgers 16a bei der Benutzung, während die Rippen 14 bei der ersten Ausführungsform (Fig. 1 und 2) insbesondere auch zur Abstandshalterung gegenüber der Stahlarmierung 16 dienen.

Der Stahlträger 16a kann in die offene Seite des Kunststoffprofils 10a ohne weiteres eingelegt werden, bevor seine Öffnung durch das Deckelprofil 20 verschlossen wird, weil die Schenkel 11a und 12a ohne weiteres zur Passage des Stahlträgers 16a auseinanderfedern. Sobald das Kunststoffprofil 10a durch das Deckelprofil 20 verschlossen ist, insbesondere nach Verkleben an den entsprechenden Rändern, bildet der Träger 1a eine stabile Konstruktion mit hoher Festigkeit.

## Patentansprüche

1. Trenngitter für die Viehhaltung,
mit einem unteren und einem oberen Träger (1, 2), die im Abstand voneinander gehalten sind und einander gegenüberliegende Flächen aufweisen, mit einer Vielzahl von dazwischen angeordneten Latten (3), deren Enden in Vertiefungen (21) dieser Flächen der Träger (1, 2) formschlüssig gehaltert sind und die aus Hart-PVC bestehen,
dadurch gekennzeichnet,
daß die Träger (1, 1a; 2) je aus einem Hohlkastenprofil (10, 10a; 20) aus Kunststoff bestehen und daß innerhalb des Hohlkastenprofils (10, 10a; 20) eine Versteifung (16, 17; 16a) angeordnet ist.

2. Trenngitter nach Anspruch 1,
dadurch gekennzeichnet, daß das Hohlkastenprofil (10, 10a; 20) aus einem etwa U- oder V-förmigen, offenen Kunststoffprofil (10, 10a) und einem dieses verschließenden Deckelprofil (20) besteht.

3. Trenngitter nach Anspruch 2,
dadurch gekennzeichnet, daß am Rand des offenen Kunststoffprofils (10, 10a) und am Rand des Deckelprofils (20) eine Rinne (15) bzw. eine Vorsprungsrippe (22) vorgesehen sind, die zur Verbindung beider Profile (10, 10a; 20) ineinandergreifen.

4. Trenngitter nach Anspruch 2 oder 3,
dadurch gekennzeichnet, daß das offene Kunststoffprofil (10, 10a) und das Deckelprofil (20) miteinander verklebt sind, insbesondere im Bereich der Rinne (15) und der Vorsprungsrippe (22).

5. Trenngitter nach einem der vorstehenden Ansprüche,
dadurch gekennzeichnet, daß zur Bildung der Versteifung die Träger (1, 2) mit einer Betonfüllung (17) ausgegossen sind.

6. Trenngitter nach Anspruch 5,
dadurch gekennzeichnet, daß die Betonfüllung (17) mit einer Stahlarmierung (16) in Korbform armiert ist.

7. Trenngitter nach Anspruch 5 oder 6,
dadurch gekennzeichnet, daß das Deckelprofil (20) an der Unterseite mit Angüssen zur formschlüssigen Verankerung im Beton (17) versehen ist.

8. Trenngitter nach einem der Ansprüche 1 bis 4,
dadurch gekennzeichnet, daß die Versteifung aus einem etwa U- oder V-förmigen Metallträger (16a), insbesondere aus Stahl, besteht.

9. Trenngitter nach den Ansprüchen 2 und 6 oder 2 und 8,
dadurch gekennzeichnet, daß die Stahlarmierung (16) bzw. der Metallträger (16a) vor dem Verschließen mit dem Deckelprofil (20) von der offenen Seite her in das noch offene Kunststoffprofil (10, 10a) eingesetzt sind.

10. Trenngitter nach einem der vorstehenden Ansprüche,
dadurch gekennzeichnet, daß die Innenflächen des Hohlkastenprofils bzw. des offenen Kunststoffprofils (10, 10a) mit nach innen stehenden Rippen (14; 14a, 14b) versehen sind, durch die die Stahlarmierung (16) bzw. der Metallträger (16a) im Abstand von den Wandungen des Trägers (10, 10a; 20) gehalten wird.

11. Trenngitter nach einem der vorstehenden Ansprüche,
dadurch gekennzeichnet, daß die beiden Träger (1, 1a; 2) durch ein Kopfstück (5) in Plattenform im Abstand voneinander gehalten sind.

12. Trenngitter nach einem der vorstehenden Ansprüche,
dadurch gekennzeichnet, daß das Hohlkastenprofil bzw. das offene Kunststoffprofil (10, 10a) und das Deckelprofil (20) aus Hart-PVC bestehen.

## Claims

1. A partition grid for holding cattle, having a lower and an upper support (1, 2) which are held spaced from one another and have mutually opposing faces, having a plurality of slats (3) which are arranged therebetween and whereof the ends are mounted form-fittingly in depressions (21) in these faces of the supports (1, 2) and which are of rigid PVC, characterized in that the supports (1, 1a; 2) each comprise a hollow box-like profile (10, 10a; 20) of synthetic material, and in that a stiffening (16, 17; 16a) is arranged within the hollow box-like profile (10, 10a; 20).

2. A partition grid according to Claim 1, characterized in that the hollow box-like profile (10, 10a; 20) comprises an approximately U- or V-shaped open synthetic-material profile (10, 10a) and, closing the latter, a cover profile (20).

3. A partition grid according to Claim 2, characterized in that there are provided on the edge of the open synthetic-material profile (10, 10a) and on the edge of the cover profile (20) respectively a groove (15) and a projecting rib (22) which engage in one another to connect the two profiles (10, 10a; 20).

4. A partition grid according to Claim 2 or 3, characterized in that the open synthetic-material profile (10, 10a) and the cover profile (20) are joined to one another by adhesion, in particular in the region of the groove (15) and the projecting rib (22).

5. A partition grid according to one of the preceding claims, characterized in that, to form the stiffening, the supports (1, 2) are filled by pouring with a concrete filler (17).

6. A partition grid according to Claim 5, characterized in that the concrete filler (17) is reinforced using a steel reinforcement (16) in the form of a basket.

7. A partition grid according to claim 5 or 6, characterized in that the cover profile (20) is provided on the underside with cast-on projections for the form-fitting anchoring in the concrete (17).

8. A partition grid according to one of Claims 1 to 4, characterized in that the stiffening comprises an approximately U- or V-shaped metal support (16a), in particular of steel.

9. A partition grid according to Claims 2 and 6 or 2 and 8, characterized in that, before closure with the cover profile (20), the steel reinforcement (16) or the metal support (16a) is inserted from the open side into the still open synthetic-material profile (10, 10a).

10. A partition grid according to one of the preceding claims, characterized in that the inner faces of the hollow box-like profile or of the open synthetic-material profile (10, 10a) are provided with inwardly projecting ribs (14; 14a, 14b) which hold the steel reinforcement (16) or the metal support (16a) spaced from the walls of the support (10, 10a; 20).

11. A partition grid according to one of the preceding claims, characterized in that the two supports (1, 1a; 2) are held spaced from one another by a cap piece (5) in the form of a plate.

12. A partition grid according to one of the preceding claims, characterized in that the hollow box-like profile or the open synthetic-material profile (10, 10a) and the cover profile (20) are of rigid PVC.

## Revendications

1. Grille de séparation pour l'élevage de bétail, équipée d'un support inférieur et d'un support supérieur (1, 2), qui sont maintenus à distance l'un de l'autre et présentent des surfaces se faisant face, et d'une pluralité de lattes (3) intercalées, dont les extrémités sont tenues par conjugaison de forme dans des cavités (21) des surfaces des supports (1, 2) et qui sont à base de PVC dur, caractérisée en ce que les supports (1, 1a; 2) comprennent chacun un profil de caisson (10, 10a; 20) en synthétique et en ce qu'un renforcement (16, 17; 16a) est disposé à l'intérieur du profil de caisson (10, 10a; 20).

2. Grille de séparation selon la revendication 1, caractérisée en ce que le profil de caisson creux (10, 10a; 20) comprend un profil synthétique (10, 10a) ouvert et en forme essentiellement de U ou de V et un profil de couvercle (20) fermant celui-ci.

3. Grille de séparation selon la revendication 2, caractérisée en ce qu'au bord du profil synthétique (10, 10a) ouvert et au bord du profil de couvercle (20) sont prévues une goulotte (15) et une nervure en saillie (22) qui s'emboîtent pour l'assemblage des deux profils (10, 10a; 20).

4. Grille de séparation selon le revendication 2 ou 3, caractérisée en ce que le profil synthétique (10, 10a) ouvert et le profil de couvercle (20) sont collés entre eux, en particulier dans la zone de la goulotte (15) et de la nervure en saillie (22).

5. Grille de séparation selon l'une quelconque des revendications précédentes, caractérisée en ce que les supports (1, 2) sont scellés avec une charge de béton (17) pour la formation du renforcement.

6. Grille de séparation selon la revendication 5, caractérisée en ce que la charge de béton (17) est armée avec une armature d'acier (16) ayant une forme de panier.

7. Grille de séparation selon la revendication 5 ou 6, caractérisée en ce que le profil de couvercle (20) est pourvu sur la face inférieure de culots d'injection pour l'ancrage par conjugaison de forme dans le béton (17).

8. Grille de séparation selon l'une quelconque des revendications 1 à 4, caractérisée en ce que le renforcement est à base d'un support métallique (16a) en forme essentiellement de U ou de V, en particulier en acier.

9. Grille de séparation selon les revendications 2 et 6 ou 2 et 8, caractérisée en ce que l'armature en acier (16) et le support métallique (16a) sont insérés par le côte ouvert dans le profil synthétique (10, 10a) encore ouvert avant la fermeture avec le profil de couvercle (20).

10. Grille de séparation selon l'une quelconque des revendications précédentes, caractérisée en ce que les surfaces internes du profil de caisson et du profil synthétique (10, 10a) ouvert sont pourvues de nervures (14; 14a, 14b) dirigées vers l'intérieur grâce auxquelles l'armature en acier (16) et le support métallique (16a) sont maintenus à distance des parois du support (10, 10a; 20).

11. Grille de séparation selon l'une quelconque des revendications précédentes, caractérisée en ce que les deux supports (1, 1a; 2) sont maintenus à distance par une pièce de tête (5) en forme de plaque.

12. Grille de séparation selon l'une quelconque des revendications précédentes, caractérisée en ce que le profil de caisson et le profil synthétique (10, 10a) ouvert et le profil de couvercle (20) sont en PVC dur.
